(19) Europäisches Patentamt
European Patent Office
Office européen des brevets

(11) **EP 3 107 031 A1**

(12) **EUROPEAN PATENT APPLICATION**

(43) Date of publication:
**21.12.2016 Bulletin 2016/51**

(51) Int Cl.:
*G06K 9/00* (2006.01)   *G06T 7/00* (2006.01)

(21) Application number: **15172692.4**

(22) Date of filing: **18.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Agfa HealthCare**
  **1150 Vienna (AT)**
• **VRVis Zentrum für Virtual Reality und Visualisierung Forschungs-GmbH**
  **1220 Vienna (AT)**
• **AVL List GmbH**
  **8020 Graz (AT)**

(72) Inventors:
• **Wimmer, Maria**
  **2640 Mortsel (BE)**
• **Major, David**
  **2640 Mortsel (BE)**
• **Novikov, Alexey**
  **2640 Mortsel (BE)**
• **Buehler, Katja**
  **2640 Mortsel (BE)**

(74) Representative: **Verbrugghe, Anne Marie L.**
  **Agfa HealthCare**
  **IP Department 3802**
  **Septestraat 27**
  **2640 Mortsel (BE)**

(54) **METHOD, APPARATUS AND SYSTEM FOR SPINE LABELING**

(57)  The invention relates to a method and an according apparatus and system for labeling one or more parts of a spine in at least one magnetic resonance (MR) image (30) of a human or animal body, said method comprising the following steps: transforming the image (30) having a first number of intensity levels into a target image (33) having a second number of intensity levels, the second number of intensity levels being smaller than the first number of intensity levels, by considering the entropy of texture variations in one or more training images; determining a position, in particular a center position, in each of the one or more parts of the spine in the target image (33); and labeling the determined position of the one or more parts of the spine in the image (30) or the target image (33) with anatomical labels.

Fig. 4

**Description**

The present invention relates to a method and a corresponding apparatus and system for labeling one or more parts of a spine in at least one magnetic resonance (MR) image of a human or animal body according to the independent claims.

Labeling of the spinal column in MR sequences is an important task in clinical practice, as it serves the diagnosis and operation planning of spine related pathologies. However, when it is done manually, it is a time consuming task for clinicians, hence automatic or semi-automatic approaches are in demand. Automatic approaches do not need any user interaction, whereby semi-automatic methods rely on minimal input from the user, e.g. an initial click position. Furthermore, there is a wide range of different MR acquisition protocols which have high variations in terms of appearance and exhibit no standardized intensity scale, like the Hounsfield scale for computer tomography (CT). Therefore, approaches which are able to localize the spinal parts without retraining for the different imaging parameters are of high interest.

It is an object of the invention to provide a method, apparatus and system allowing for a reliable labeling of one or more parts of a spine in different kinds of MR image data sets, in particular without prior knowledge of respective imaging parameters.

This object is achieved by the method, apparatus and system according to the independent claims.

A method for labeling one or more parts of a spine in at least one magnetic resonance (MR) image of a human or animal body according to the invention comprises the following steps: transforming the image having a first number of intensity levels into a target image having a second number of intensity levels, the second number of intensity levels being smaller than the first number of intensity levels, by considering the entropy of texture variations in one or more training images; determining a position, in particular a center position, in each of the one or more parts of the spine in the target image; and labeling the determined position of the one or more parts of the spine in the image or the target image with anatomical labels.

An apparatus for labeling one or more parts of a spine in at least one magnetic resonance (MR) image of a human or animal body according to the invention comprises an image processing unit configured to: transform the image having a first number of intensity levels into a target image having a second number of intensity levels, the second number of intensity levels being smaller than the first number of intensity levels, by considering the entropy of texture variations in one or more training images; determine a position, in particular a center position, in each of the one or more parts of the spine in the target image; and label the determined position of the one or more parts of the spine in the image or the target image with anatomical labels.

A system for magnetic resonance imaging and spine labeling according to the invention comprises a magnetic resonance imaging (MRI) apparatus configured to acquire at least one magnetic resonance (MR) image of at least a part of a human or animal body, and an apparatus for labeling one or more parts of a spine in the at least one magnetic resonance image according to the invention.

Preferably, the image processing and/or labeling steps of the method according to the invention are performed automatically, i.e. without user input or interaction. Same applies to according steps performed by the apparatus according to the invention. Notwithstanding this, the invention also relates to "semi-automatic" spine labeling, wherein a limited or minimal user input may be required. For example, a user may be required to manually select an initial position, e.g. in an intervertebral disc, in an acquired MR image to be labeled and/or to assign a single anatomical label to an initial position, e.g. a label denoting the intervertebral disc, like "L2/L3" denoting the disc between the second and third lumbar vertebra. Preferably, such user input is required before a trained model is initialized, i.e. initially placed, on one or more views of the acquired MR image and/or before the MR image is transformed to the target image having a reduced grayscale.

In particular, the invention relates to a preferably semi-automatic algorithm for labeling the spinal column. In a learning-based approach, so-called entropy-optimized texture models (ETMs) of spinal parts, like intervertebral discs and vertebrae, are trained on the basis of training images and used for transforming an unseen MR image to be labeled into a target image by reducing the intensity scale of the MR image. When labeling the image, the learned models are applied and disc center positions are preferably detected with an adaptive, non-machine-learning based approach in the transformed target image.

By means of the invention, the following advantages are achieved: Various kinds of MR data, like T1- weighted (T1w) and T2-weighted (T2w) scans, acquired on different scanners with varying scan parameters, can be processed. Prior knowledge about the scan, e.g. through Digital Imaging and Communications in Medicine (DICOM) tags, is not required, because only raw image data is processed. Discs can be localized correctly in these scans after providing a disc center candidate position which lies inside the disc. The invention can be applied to sequences and protocols which are not covered by the particular training set.

In summary, the invention allows for a reliable labeling of one or more parts of a spine in different kinds of MR image data sets, in particular MR scans with high intensity variability, without prior knowledge of respective imaging parameters.

In the context of the invention, the term "part of a spine" preferably relates to a vertebra and/or an intervertebral disk of a spine. Accordingly, said one or more parts of the spine in the image correspond to one or more vertebrae and/or one or more intervertebral discs of the spine in the image.

Moreover, the term "number of intensity levels" preferably relates to the total number of different intensity values and/or grayscale values the pixels or voxels of an acquired image and/or target image have.

The term "reducing" in the context of intensity or grayscale relates to "transforming" or a "transformation of" an image by reducing its first number of intensity levels to the (smaller) second number of intensity levels. Likewise, the term "normalizing" or "normalization" preferably may also relate to a transformation of the image by reducing its number of intensity levels.

Moreover, in the context of the invention, the term "texture" or "image texture" preferably relates to information about the spatial arrangement of grayscale values and/or intensity values in an image or in a selected region of an image.

Further, in the context of the invention, the term "entropy" preferably relates to information content of an image considering a probability, in particular a probability density distribution, of the occurrence of an intensity value and/or a grayscale value.

Accordingly, considering "the entropy of texture variations in one or more training images" preferably relates to considering the probability, in particular the probability density distribution, of the occurrence of intensity values and/or grayscale values of a spatial arrangement of intensity values or grayscale values, respectively, in training images.

The term "one or more training images" preferably relates to a set of, e.g. 10 to 30, images which were acquired, preferably prior to the acquired image to be labeled, from one or more different subjects and/or by one or more different MR scanners and/or with one or more different MRI protocols.

According to a preferred embodiment, the image is transformed into the target image by applying a texture transformation to the image, wherein the texture transformation is obtained by optimizing transformations of training textures extracted from the training images having the first number of intensity levels into target textures having the second number of intensity levels in terms of entropy.

Preferably, the texture transformation applied to the image is further optimized by matching a local model of the one or more parts of the spine to the spine in the image, wherein the texture transformation for a currently overlapped texture is optimized with Bayesian reasoning.

Preferably, the texture transformations of the training textures are optimized iteratively based on an entropy-driven cost function.

It is, moreover, preferred that the position in each of the one or more parts of the spine in the target image is determined by considering at least one local model of the one or more parts of the spine.

Preferably, the at least one local model is a three-disc model of a section of the spine including a middle disc and its adjacent upper disc and lower disc.

It is further preferred that the at least one local model is built from sparse landmarks.

According to yet another preferred embodiment, the at least one local model is obtained in a training phase by manually annotating training images, automatically extracting sparse landmarks from the annotated training images and building the local model based on the extracted landmarks.

Preferably, the position in each of the one or more parts of the spine in the target image is determined by an adaptive refinement of a candidate position, which is obtained by an iterative matching of the local model to the spine in the image.

Further advantages, features and examples of the present invention will be apparent from the following description of following figures:

Fig. 1    shows an example of an apparatus and a system according to the invention;

Fig. 2    shows an overview on an example of a procedure for training models for image data normalization;

Fig. 3    shows an example of a training image with extracted landmarks used for building a three-disc model;

Fig. 4    shows an overview on an example of a procedure for labeling an unseen MR image; and

Fig. 5    shows a detail of an example of a normalized target image in which filter regions are marked to illustrate adaptive disc center refinement.

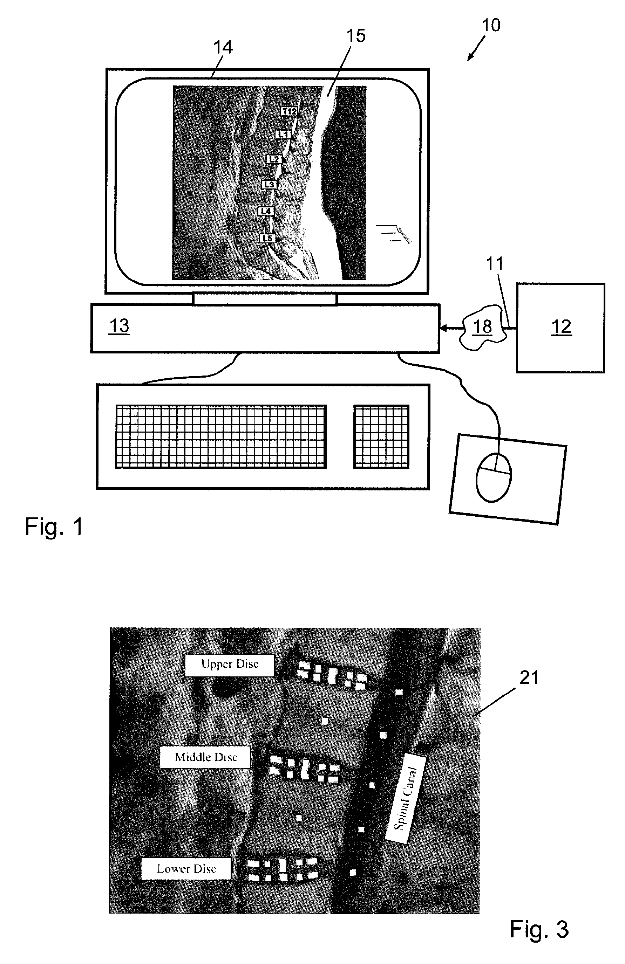

Fig. 1 shows an example of an apparatus 10 and a system according to the invention. The system comprises a medical imaging apparatus 12, in particular a magnetic resonance imaging (MRI) apparatus, which is configured to acquire one or more images, e.g. a plurality of two-dimensional images or a three-dimensional image, of a human or animal body and to generate a corresponding medical image data set 11. The apparatus 10 comprises an image processing unit 13, e.g. a workstation or a personal computer (PC), which is configured to process the image data set 11. Preferably, the image data set 11 is transferred from the medical imaging apparatus 12 to the image processing unit 13 via a data network 18, e.g. a local area network (LAN) or wireless LAN (WLAN) in a hospital environment or the internet.

The image processing unit 13 is preferably configured to generate a volume reconstruction and/or a slice image 15 of the image data set 11 on a display 14, e.g. a TFT screen of the workstation or PC, respectively. The image processing unit 13 is further configured to automatically or at least semi-automatically label one or more parts of a spine represented in the image 15. In the present example, thoracic vertebra T12 and lumbar vertebrae L1 to L5 were automatically labelled with corresponding labels "T12" and "L1" to "L5", respectively.

According to a preferred aspect of the invention, a learning-based algorithm is applied that uses local entropy-optimized texture models for reducing, also referred to as "normalizing", the intensity scale of the acquired image 15 to only a few gray levels of a target image. For example, the image 15 is transformed to a target image (not shown) having an intensity scale of in total three different intensity values. The task of intervertebral disc detection is performed on the normalized target image. This will be elucidated in more detail as follows.

Preferably, local entropy-optimized texture models (ETMs) are used for reducing the intensity scale of the acquired images to only a few intensity levels or gray levels of the target images. By this means, spine labeling of multi-modal imaging data, like different MR sequences and computed tomography (CT) datasets, with only a single model is enabled and/or facilitated. In the following, both the general approach of ETMs and the particular application of ETMs for spine labeling are described.

ETMs in General

ETMs are similar to Active Appearance Models (AAMs) in the description of shape with Principal Component Analysis (PCA). From a set of annotated images with corresponding landmarks, n training textures $T_k$ are extracted and quantized to r gray levels.

For the representation of texture, the intensities in the training textures $T_k$ are reduced from r input gray levels, in the context of the invention also referred to as "first number of intensity levels", to a reduced scale of only a few target gray levels s, in the context of the invention also referred to as "second number of intensity levels". Formally, mappings $f_k$ for every training texture $T_k$ are determined:

$$f_k : \mathbb{Z}_r \to \mathbb{Z}_s, \quad s \ll r, \quad k = 1 \ldots n. \quad (1)$$

Every texel $t_j$ in the model texture $T_{model}$ captures the variability of the mapped target values $g_i' \in \{1 \ldots s\}$ at the corresponding texel $t_j$ in the textures $T_k$. Hence n occurrences of the possible s target values can be observed, which are interpreted as probability density functions (PDFs) $p_j$. Preferably, reliable predictions are favored over uncertain predictions by minimizing the entropy of a corresponding PDF $p_j$:

$$H(p_j) = -\sum_{i=1}^{s} p_j(g_i') \log_2(p_j(g_i')) \quad (2)$$

In order to increase the reliability of mappings, the entropy $H^{model}$ for all $N$ model texels $t_j$ is minimized:

$$H^{model} = \frac{1}{N} \sum_{j=1}^{N} H(p_j) \to \min \quad (3)$$

At the same time, the information gained from the extracted training textures $T_k$ is maximized. The image entropy $H^{tex}$ is denoted as

$$H^{tex} = \frac{1}{n} \sum_{k=1}^{n} H(f_k(I_k)) \to \max. \quad (4)$$

Combining both criteria results in the final cost function:

$$\{f_1^\star, \ldots, f_n^\star\} = \underset{\{f_1, \ldots, f_n\}}{\mathrm{argmax}} \left( H^{tex} - H^{model} \right) \quad (5)$$

Preferably, the texture transformations $f_k$ are optimized in an iterative manner. The result of the training is a learned model, which captures the uncertainty of the training textures $T_k$. Different structures are mapped to different target gray levels s depending on their contrast to each other.

Further details regarding the principle of operation of ETMs, ETM construction and ETM matching are described in S. Zambal, K. Bühler, and J. Hladůvka, Entropy-optimized Texture Models, in Medical Image Computing and Computer-Assisted Intervention - MICCAI 2008, volume 5242 of Lecture Notes in Computer Science, pages 213-221, Springer Berlin Heidelberg, 2008, which is incorporated by reference herewith.

ETMs for Spine Labeling

In the training phase, preferably three-dimensional ETMs are learned for data normalization from a mixed set of annotated T1w and T2w MR volume datasets.

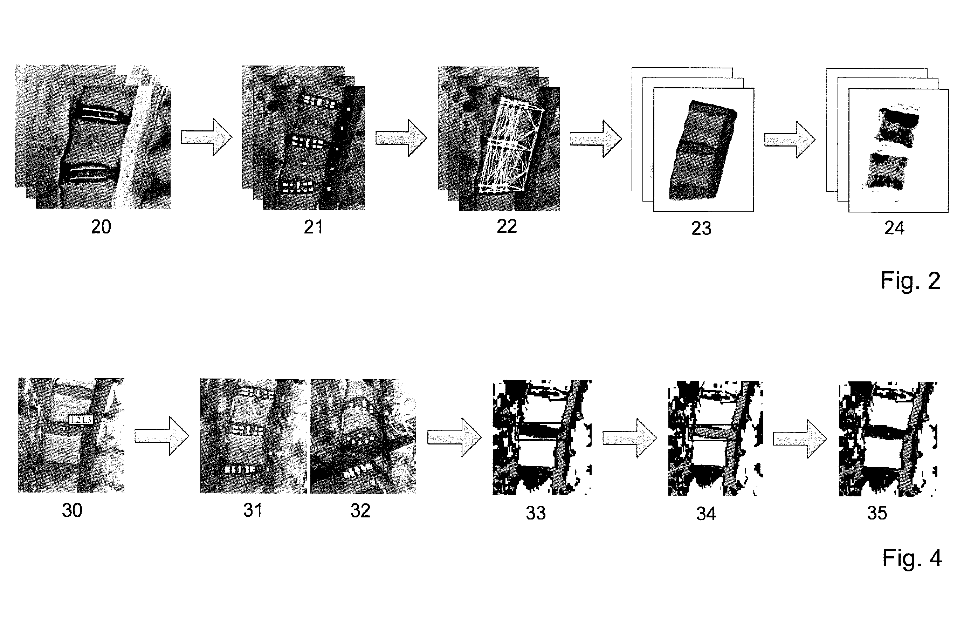

An overview of a preferred procedure for training of ETMs for data normalization is illustrated in Figure 2. From an annotated set of Magnetic Resonance (MR) data 20, e.g. annotated T1w and T2w MR data, corresponding landmarks are extracted, see dataset 21, and a shape model is built, indicated in dataset 22. Training textures 23 are extracted and texture transformations are performed and optimized iteratively based on an entropy-driven cost function to obtain normalized training textures 24 having a reduced intensity scale. This procedure will be explained in more detail in the following.

Instead of building a single model for the complete lumbar spine, preferably a number of smaller local models are built. In this way, a higher flexibility of the method with respect to anatomical changes, e.g. in the curvature, is achieved.

Moreover, instead of building models from dense landmarks, preferably three-disc-models $M_i$, wherein around a middle disc $d_i$ also its adjacent upper disc $d_{i-1}$ and lower disc $d_{i+1}$ are included, are trained from sparse landmarks (see bright dots in three adjacent discs shown in dataset 21). Preferably, this is done for all three-disc-groups from a standard spine atlas, which consists of 24 vertebrae and 23 intermediate discs. This results in 21 local ETMs. In this way, the complete spinal region from C2/C3 to L5/S1 is covered.

Preferably, when annotating the acquired training dataset 20 one or more of the following anatomical landmarks and structures are placed in the dataset 20 by a domain expert and further used for model building:

- vertebral body center positions $v_j$ (see bright dot in the center of the vertebra shown) with their corresponding anatomical label $k_j$, $k_j$ = {C3, C4,..., L4, L5},
- disc center positions $d_i$ (see bright dots in the center of the two discs shown) with their corresponding anatomical label $\lambda_i$, whereby $\lambda_i$ = {C2/C3, C3/C4,..., L4/L5, L5/S1},
- a cylinder, which is placed for every disc at the annotated center $d_i$ in a way that it approximates the dimension of the disc and lies within the disc (see lines in each of the discs shown),
- corresponding spinal canal landmarks $c_i$ and $c_j$ (see dark dots) to the disc and vertebrae centers are placed in the spinal canal.

For example, a total number of eight scans are used for the training of the 21 three-disc-models, wherein this set of training volumes consists of scans based on different scan parameters and/or weighting, e.g. T1w and T2w weighted scans. Hence, preferably only one cross-modality model is trained for the desired region, rather than training a model for each T1w and T2w weighting.

From the annotated ground truth, i.e. the annotated landmarks and structures in the training dataset 20, one or more of the following correspondent landmarks are extracted for model building, as illustrated by dataset 21 in Figure 2 and Figure 3 (see bright dots): two vertebral body center positions $v_j$, center positions of middle $d_i$, upper $d_{i-1}$ and lower disc $d_{i+1}$, and sampled points along the surface of the annotated cylinder. Furthermore spinal canal landmarks $c$ are added, which correspond to the disc and vertebra centers. In the example given in Figures 2 and 3, the extracted landmarks are used for building a three-disc-model $M_i$ for the L2/L3 vertebrae. It has to be noted that all extracted 3D positions are projected to the middle sagittal slice for visualization purposes, hence some landmarks are occluded.

Further, the extracted landmarks undergo a meshing procedure, wherein a shape model, also referred to as "mesh", of the spinal parts represented in the training image dataset is automatically generated based the extracted data, preferably by using tetrahedral elements (Delaunay Tetrahedralization), as illustrated in dataset 22 shown Figure 2.

On the tetrahedralized meshes, training textures $T_k$ 23 are extracted and optimized iteratively based on an entropy-driven cost function, so that normalized training textures 24 are obtained having a considerably smaller gray scale, e.g. 3 gray levels, than the extracted training textures 23.

For example, all extracted training textures are quantized to r= 110 source gray levels and the model is trained to reduce their intensity scale to s = 3 target levels. Moreover, the data are preferably resampled so that they exhibit similar voxel sizes.

The training texture intensity transformations are optimized individually for every training texture. If these intensity transformations, after the learning step, are applied to textures extracted from an (unseen) image to be labeled, a normalized representation of the textures of the image is obtained, wherein the total number of gray levels is considerably reduced, e.g. to 3 target levels.

Labeling of an Unseen Volume Dataset

An overview on steps of a preferred procedure for labeling an unseen MR scan is illustrated in Figure 4. Based on an initial position and label provided by a user, see bright dot and "L2/L3" in dataset 30, the corresponding model is placed in the scans, see dataset 31 (2D view) and dataset 32 (3D view). The overlapped texture is extracted and the texture transformation is optimized iteratively to obtain normalized data 33 having a reduced gray scale. On the obtained intensity-reduced scan 33, the disc candidate position $d'_i$ is refined with an adaptive feature detector, which provides the final center position $d^*_i$, see data set 35. This procedure will be explained in more detail in the following.

In the present example, the procedure of labeling an unseen scan $I_u$ (see dataset 30 in Figure 4) is semi-automatic, wherein minimal input from a user is required, namely:

- initial click position p in the volume dataset inside an intervertebral disc or vertebra, and
- anatomical label $\lambda_i$, in present example "L2/L3", which corresponds to the disc at the position p.

Subsequently, matching of the ETMs is performed, wherein, based on the users' clicked position p, an instance of the learned model $M_i$, which corresponds to the user-assigned anatomical label $\lambda_i$, is placed in the image, see datasets 31 and 32.

Then, the texture $T_u$ is extracted from the scan $I_u$, which is currently overlapped by the learned model $M_i$, and quantized to a first number r of source gray levels, wherein the first number r of source gray levels corresponds to the number of source gray levels learned for model $M_i$. During iterative model matching, the texture transformation $f_u$ for the currently overlapped texture $T_u$ is optimized with Bayesian reasoning.

By applying the obtained transformation $f_u$ on the extracted Texture $T_u$ an intensity-reduced scan 33 (also referred to as "normalized data") is obtained, which exhibits only a second number s of target gray levels.

Furthermore, candidate positions for the landmarks are obtained, e.g. the middle disc $d'_i$, upper disc $d'_{i-1}$, lower disc $d'_{i+1}$, or vertebrae center.

Subsequently, a refinement step, which is also referred to as adaptive disc center position refinement; is applied to the candidate disc center position $d'_i$. Preferably, a bounding box R, which defines a region of interest for the refinement, is spanned around the model-matched disc position $d'_i$. The size of the bounding box R is based on the annotated ground truth cylinders, from which the average dimension of discs in sagittal, axial and coronal direction is calculated: $s_{sag}$, $s_{ax}$ and $s_{cor}$.

From the landmark positions from the matched model instance, the normal n is derived, which describes the orientation of the current disc $d'_i$ in 3D. For every voxel inside R it is decided if it belongs to the disc or not, preferably with an adaptive method inspired by Haar-like features as described by S.-K. Pavani, D. Delgado, and A. F. Frangi, Haar-like features with optimally weighted rectangles for rapid object detection, in: Pattern Recognition, 43(1):160-172, 2010, which is incorporated by reference herewith.

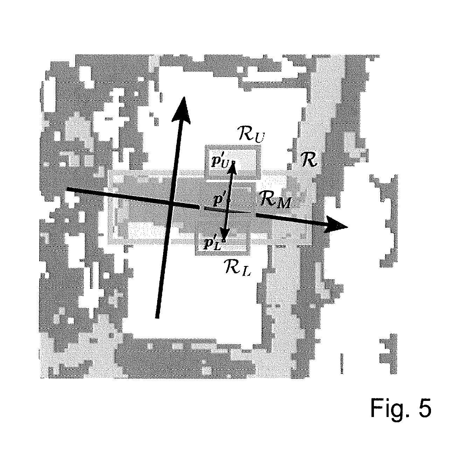

Figure 5 illustrates the approach, which works as follows:

- A filter is constructed with three regions, each having the dimension $s_x \times s_y \times s_z$: upper region $R_U$, middle region $R_M$ and lower region $R_L$.
- The regions are then placed in the following way: $R_M$ is placed at the current position p' in R. $R_U$ and $R_L$ are displaced based on the surface normal n and the average disc thickness $t$ estimated from the ground truth data:

$$p'_U = p' + n * \bar{t}_i \qquad (6)$$

$$p'_L = p' - n * \bar{t}_i \qquad (7)$$

- For every region $R_U$, $R_M$ and $R_L$, the intensity mode is calculated: $m_L$, $m_M$ and $m_U$.
- The voxel is considered as disc candidate and the corresponding voxel is set in a binary mask at the following condition:

$$M(x, y, z) = \begin{cases} 1 & \text{if } \hat{m}_U \neq \hat{m}_M \wedge \hat{m}_L \neq \hat{m}_M \\ 0 & \text{otherwise} \end{cases} \quad (8)$$

From the obtained binary mask for the disc, the centroid as the refined center position $d^*_i$ is calculated.

In Figure 5 the filter regions $R_U$, $R_M$ and $R_L$ are represented by smaller boxes and the search region R is represented by the larger box. Note that the illustration is done in 2D for visualization purposes.

Preferably, the labeling is performed in an iterative manner. From the model matched around the initial position p candidate positions for the upper and lower disc, i.e. $d'_{i-1}$ and $d'_{i+1}$ are also obtained. Preferably, the search downwards the spinal column is continued towards L5/S1 and then upwards to C2/C3 and the following is done for every disc:

- matching an instance of the corresponding model $M_i$ to the current underlying data and obtain a disc center position $d'_i$ from the matched model,
- applying the texture transformation $t_u$, which is optimized during the model matching with Bayesian Reasoning, in order to obtain the normalized target image 33 (Figure 4)
- refining $d'_i$ with the adaptive Haar-like disc detection method and retrieve the refined disc center $d^*_i$,
- obtaining the position for the next disc from the model: $d'_{i-1}$ resp. $d'_{i+1}$.

With this method, a point cloud for the disc is obtained, as illustrated by the bright region within the bounding box R represented in dataset 34 of Figure 4. From the point cloud the centroid is calculated as the refined disc center position $d^*_i$.

Preferably, the search is stopped when the border of the volume is reached and/or no more refined positions are detected and/or no further trained models $M_i$ are available for matching.

A particular advantage of above aspects of the learning-based approach for semi-automatic labeling of lumbar MR volumes lies in the generality of this method by which various imaging protocols can be processed and which can be applied also to unseen protocols, which were not covered by the training set.

Furthermore, the method is significantly faster to train than deep learning approaches known in the art.

Further, by means of the invention, intervertebral discs can be successfully localized with a recall of 98.59 %. Moreover, disc center positions are provided with a mean distance of 3.82 $\pm$ 2.47 mm to the expert-annotated ground truth position.

**Claims**

1. A method for labeling one or more parts of a spine in at least one magnetic resonance (MR) image (15, 30) of a human or animal body, said method comprising the following steps:

   a) transforming the image (15, 30) having a first number (r) of intensity levels into a target image (33) having a second number (s) of intensity levels, the second number (s) of intensity levels being smaller than the first number (r) of intensity levels, by considering the entropy of texture variations in one or more training images (20),
   b) determining a position ($d^*_i$), in particular a center position, in each of the one or more parts of the spine in the target image (33), and
   c) labeling the determined position ($d^*_i$) of the one or more parts of the spine in the image (15, 30) or the target image (33) with anatomical labels ("L1" to "L5", "T12").

2. The method according to claim 1, the image (15, 30) being transformed into the target image (33) by applying a texture transformation ($f_k$) to the image (15, 30), the texture transformation ($f_k$) being obtained by optimizing transformations ($f_k$) of training textures ($T_k$) of the training images (20) having the first number (r) of intensity levels into target textures having the second number (s) of intensity levels in terms of entropy.

3. The method according to claim 2, the texture transformations ($f_k$) of the training textures ($T_k$) being optimized iteratively based on an entropy-driven cost function.

4. The method according to any of the preceding claims, the position ($d^*_i$) in each of the one or more parts of the spine in the target image being determined by considering at least one local model of the one or more parts of the spine.

5. The method according to claim 4, the at least one local model being a three-disc model of a section of the spine including a middle disc ($d_i$) and its adjacent upper disc ($d_{i-1}$) and lower disc ($d_{i+1}$).

6. The method according to claim 4 or 5, the at least one local model being built from sparse landmarks.

7. The method according to any of the claims 4 to 6, the at least one local model (22) being obtained by manually annotating training images (20), automatically extracting sparse landmarks (21) from the annotated training images (20) and building the local model (22) based on the extracted landmarks (21).

8. The method according to claim 7, the position ($d^*_i$) in each of the one or more parts of the spine in the target image being determined by an adaptive refinement of a candidate position ($d'_i$), which is obtained by an iterative matching of the local model (22) to the spine in the image.

9. An apparatus for labeling one or more parts of a spine in at least one magnetic resonance (MR) image (15, 30) of a human or animal body, said apparatus comprising an image processing unit (13) configured to

    a) transform the image (15, 30) having a first number (r) of intensity levels into a target image (33) having a second number (s) of intensity levels, the second number (s) of intensity levels being smaller than the first number (r) of intensity levels, by considering the entropy of texture variations in at least one training image (20),
    b) determine a position ($d^*_i$), in particular a center position, in each of the one or more parts of the spine in the target image (33), and
    c) label the determined position ($d^*_i$) of the one or more parts of the spine in the image (15, 30) or the target image (33) with anatomical labels ("L1" to "L5", "T12").

10. A system for magnetic resonance imaging and spine labeling comprising:

    - a magnetic resonance imaging (MRI) apparatus (12) configured to acquire at least one magnetic resonance (MR) image (15, 30) of at least a part of a human or animal body, and
    - an apparatus (10) for labeling one or more parts of a spine in the at least one magnetic resonance image (15, 30) according to preceding claim.

Fig. 1

Fig. 3

Fig. 2

Fig. 4

Fig. 5

Europäisches
Patentamt

European
Patent Office

Office européen
des brevets

# EUROPEAN SEARCH REPORT

Application Number

EP 15 17 2692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Meelis Lootus ET AL: "Vertebrae Detection and Labelling in Lumbar MR Images" In: "Deformation Models", 1 January 2014 (2014-01-01), Springer Netherlands, Dordrecht, XP055231714, ISSN: 2212-9391 ISBN: 978-94-007-5446-1 vol. 17, pages 219-230, DOI: 10.1007/978-3-319-07269-2_19, * sections 1-4 * * abstract; figures 1-9 * | 1-10 | INV. G06K9/00 G06T7/00 |
| Y,D | SEBASTIAN ZAMBAL ET AL: "Entropy-Optimized Texture Models", 6 September 2008 (2008-09-06), MEDICAL IMAGE COMPUTING AND COMPUTER-ASSISTED INTERVENTION - MICCAI 2008; [LECTURE NOTES IN COMPUTER SCIENCE], SPRINGER BERLIN HEIDELBERG, BERLIN, HEIDELBERG, PAGE(S) 213 - 221, XP019105160, ISBN: 978-3-540-85989-5 * sections 1-5 * * abstract; figures 1-5 * | 1-10 | |
| A | EUGÉNIE ULLMANN ET AL: "Automatic Labeling of Vertebral Levels Using a Robust Template-Based Approach", INTERNATIONAL JOURNAL OF BIOMEDICAL IMAGING, vol. 32, no. 10, 1 January 2014 (2014-01-01), pages 1890-9, XP055231675, ISSN: 1687-4188, DOI: 10.1088/0031-9155/55/1/015 * sections 1-4 * * figures 1,9,10 * | 1-10 | TECHNICAL FIELDS SEARCHED (IPC) G06K G06T |

-/--

The present search report has been drawn up for all claims

| Place of search | Date of completion of the search | Examiner |
|---|---|---|
| The Hague | 30 November 2015 | Nilsson, Martin |

EPO FORM 1503 03.82 (P04C01)

Europäisches
Patentamt

European
Patent Office

Office européen
des brevets

## EUROPEAN SEARCH REPORT

Application Number

EP 15 17 2692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 690 596 A1 (AGFA HEALTHCARE [BE]; VRVIS ZENTRUM FUER VIRTUAL REALITY UND VISUALISI) 29 January 2014 (2014-01-29) * paragraphs [0003] - [0023], [0029] - [0043], [0048] - [0051], [0062] - [0083], [9199] * ----- | 1-10 | |

TECHNICAL FIELDS
SEARCHED      (IPC)

The present search report has been drawn up for all claims

| Place of search | Date of completion of the search | Examiner |
|---|---|---|
| The Hague | 30 November 2015 | Nilsson, Martin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 15 17 2692

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2015

| Patent document cited in search report | | Publication date | Patent family member(s) | | Publication date |
|---|---|---|---|---|---|
| EP 2690596 | A1 | 29-01-2014 | CN | 104641397 A | 20-05-2015 |
| | | | EP | 2690596 A1 | 29-01-2014 |
| | | | US | 2015173701 A1 | 25-06-2015 |
| | | | WO | 2014016268 A1 | 30-01-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Entropy-optimized Texture Models. **S. ZAMBAL ; K. BÜHLER ; J. HLADŮVKA.** Medical Image Computing and Computer-Assisted Intervention - MICCAI 2008, volume 5242 of Lecture Notes in Computer Science. Springer Berlin Heidelberg, 2008, vol. 5242, 213-221

- **S.-K. PAVANI ; D. DELGADO ; A. F. FRANGI.** Haar-like features with optimally weighted rectangles for rapid object detection. *Pattern Recognition,* 2010, vol. 43 (1), 160-172